# EUROPEAN PATENT SPECIFICATION

(11) **EP 0 836 800 B1**
(45) Date of publication and mention of the grant of the patent: **02.05.2001**
(21) Application number: 97660087.4
(22) Date of filing: 05.08.1997
(51) Int. Cl.: A01F 12/28

(54) **Combine harvester**
Mähdrescher
Moissonneuse-batteuse

(30) Priority: 04.10.1996 FI 964006
(43) Date of publication of application: 22.04.1998
(73) Proprietor: Sampo Rosenlew Oy, 28101 Pori (FI)
(72) Inventor: Leväjärvi, Lauri, 28101 Pori (FI)
(74) Representative: Tanskanen, Jarmo Tapio

(56) References cited:
- EP-A- 0 468 160
- EP-A- 0 628 241
- EP-A- 0 745 317
- DE-A- 4 218 610
- DE-C- 21 900
- US-A- 3 512 534

## Description

The present invention relates to a combine harvester as defined in the preamble of claim 1.

Specification EP-A-0 468 160 B1 presents a prior-art combine harvester with two successive threshing mechanisms. The first threshing mechanism comprises a first threshing drum and a sieve-like first concave, whose distance to the first threshing drum is adjustable to allow adjustment of a first gap between them. The second threshing mechanism comprises a second threshing drum, which is rotated in the same direction but at a higher peripheral speed than the first threshing drum, and a sieve-like second concave, whose distance to the second threshing drum is adjustable to allow adjustment of a second gap between them. Moreover, the combine harvester comprises adjusting elements for the adjustment of the first and second gaps. In the prior-art machine, the rear end of the first concave and the front end of the second concave are pivoted on each other to allow simultaneous adjustment of the position of the pivotal point to adjust the first and second gaps.

A problem with this prior-art combine harvester structure is that the gaps between the threshing drums and concaves cannot be individually adjusted completely independently of each other. However, individual adjustment is necessary if an optimal threshing result is to be achieved.

The object of the present invention is to eliminate the drawbacks mentioned above.

A specific object of the invention is to present a combine harvester which has two successive threshing mechanisms in each of which the gap between the threshing drum and the concave can be adjusted completely separately from each other by moving the concaves.

The combine harvester of the invention is characterized by what is presented in claim 1.

According to the invention, the first gap and the second gap are each separately adjustable. The rear end of the fist concave and the front end of the second concave, pointing towards each other, are at a distance from each other. The combine harvester comprises a sieve-like intermediate bridge which, to cover said distance, extends between the first concave and the second concave and is supported by these, designed to pass the crop material from the first concave onto the second concave.

The invention has the advantage that the concaves in the two successive threshing mechanisms can be moved relative to the threshing drums completely independently of each other, thus providing a maximal freedom of adjusting the gaps between them to the most useful size with regard to an optimal threshing result and yield. The intermediate bridge between the successive concaves passes the crop material smoothly from one threshing mechanism to the next.

In an embodiment of the combine harvester, the first end of the intermediate bridge may preferably be pivoted on the rear end of the first concave. At the same time, the second end of the intermediate bridge may be supported by the front end of the second concave. The first end of the intermediate bridge is connected to the first concave via a mechanism, such as a pin-and-slot mechanism or the like, that allows a limited motion of the first concave and the intermediate bridge relative to each other so that the first gap and/or the second gap can be separately adjusted independently of each other without a tendency of the intermediate bridge to move the first and/or the second concave. Thus, when the concaves are being adjusted, the intermediate bridge always adapts itself passively to the positions of the concaves.

In an embodiment of the combine harvester, the first and/or the second concave comprises end sides substantially parallel to the vertical walls of the harvester frame. Each one of the two end sides is provided with two pins placed at a distance from each other. The harvester frame walls are provided with two elongated holes aligned with the first pins. The holes are laid in the same direction relative to each other so that the concave, guided by the pins and holes, can be moved towards and away from the threshing drum.

In an embodiment of the combine harvester, the means for adjusting the first and/or second gap(s) comprise two drawbars connected at their lower ends to the pins on each end side of the concave and at their upper end to a control mechanism used to move the first drawbars.

In the following, the invention will be described in detail by the aid of a few examples of its embodiments by referring to the attached drawing, in which
Fig. 1 presents a perspective view of an embodiment of the combine harvester of the present invention,
Fig. 2 is a diagram illustrating the two successive threshing mechanisms of the combine harvester in Fig. 1 in lateral view,
Fig. 3 is a diagram illustrating the system for adjusting the threshing mechanisms in Fig. 2 as seen from outside the harvester frame.

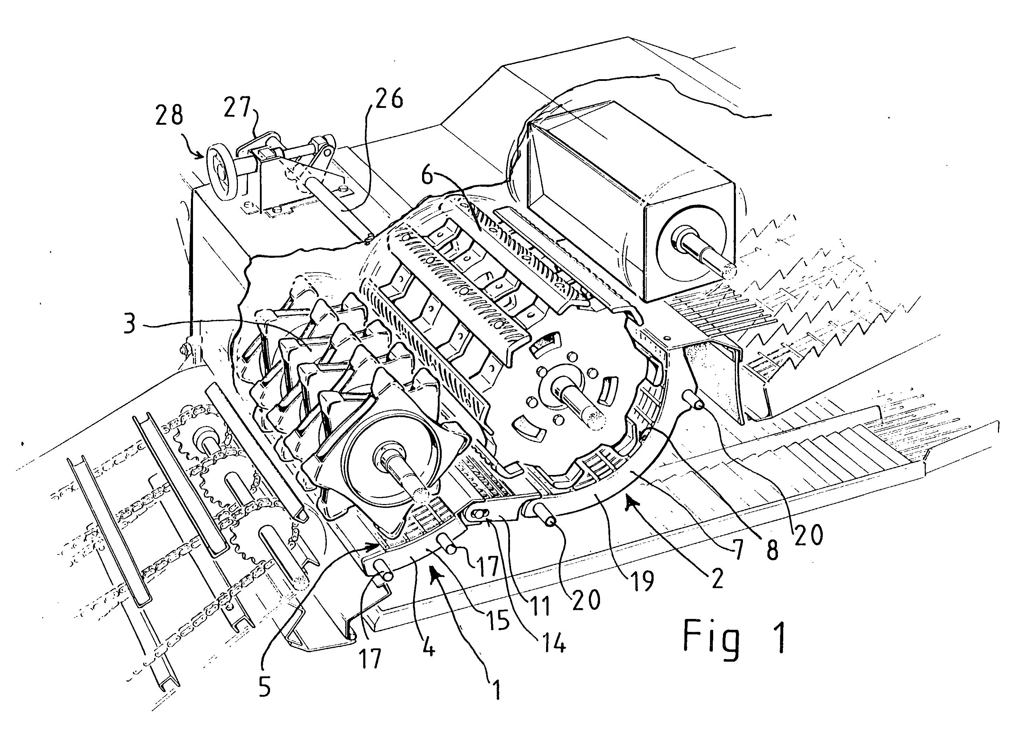

Fig. 1 shows a partial view of the combine harvester of the invention, which comprises two successive threshing mechanisms 1, 2. As seen in the direction of advance of the crop material to be threshed, foremost is the first threshing mechanism 1, to which the crop material is brought from the cutting table (not shown) by a feed conveyor partially visible in the figure. Placed after the first threshing mechanism 1 is a second threshing mechanism 2. The first threshing mechanism 1 comprises a first threshing drum 3 and a sieve-like first concave 4, whose distance from the first threshing drum is adjustable to allow adjustment of the gap 5 between them. The second threshing mechanism 2 comprises a second threshing drum 6, which is rotatable in the same direction as and preferably at a higher peripheral speed than the first threshing drum 3, and a sieve-like second concave 7, whose distance to the second threshing drum is adjustable to allow adjustment of the gap 8 between them. Moreover, the combine harvester comprises means for the adjustment of the first gap 5 and the second gap 8. The first gap 5 and the second gap 8 can be adjusted separately. The rear end 9 of the fist concave 4 and the front end 10 of the second concave 7, pointing towards each other, are at distance A from each other. In addition, the combine harvester comprises a sieve-like intermediate bridge 11 which, to cover distance A, extends between the first concave 4 and the second concave 7 and is supported by these, to pass the crop material to be threshed from the first concave onto the second concave.

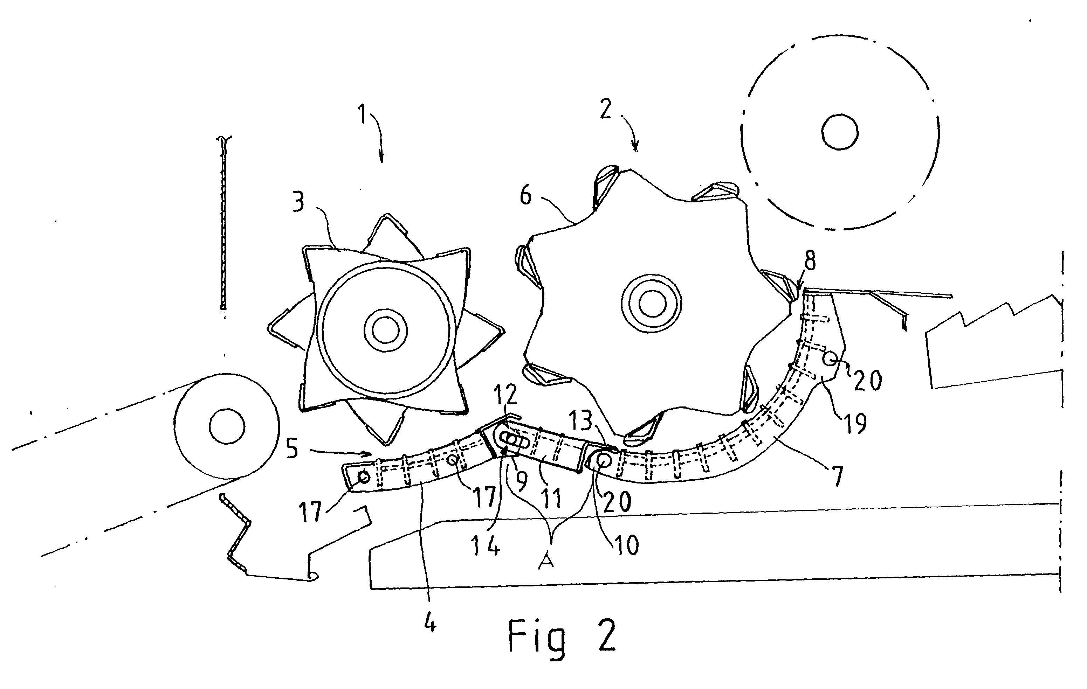

As can be seen from Fig. 2, the intermediate bridge 11 comprises a first end 12 and a second end 13 opposite to the first end. The first end 12 of the intermediate bridge 11 is connected to the first concave 4 via a pin-and-slot mechanism 14, which allows limited motion of the first concave 4 and the intermediate bridge 11 relative to each other so that the first concave 4 and/or the second concave 7 can be separately adjusted independently of each other without a tendency of the intermediate bridge to move them. The second end 13 of the intermediate bridge 11 is supported by the front end 10 of the second concave 7.

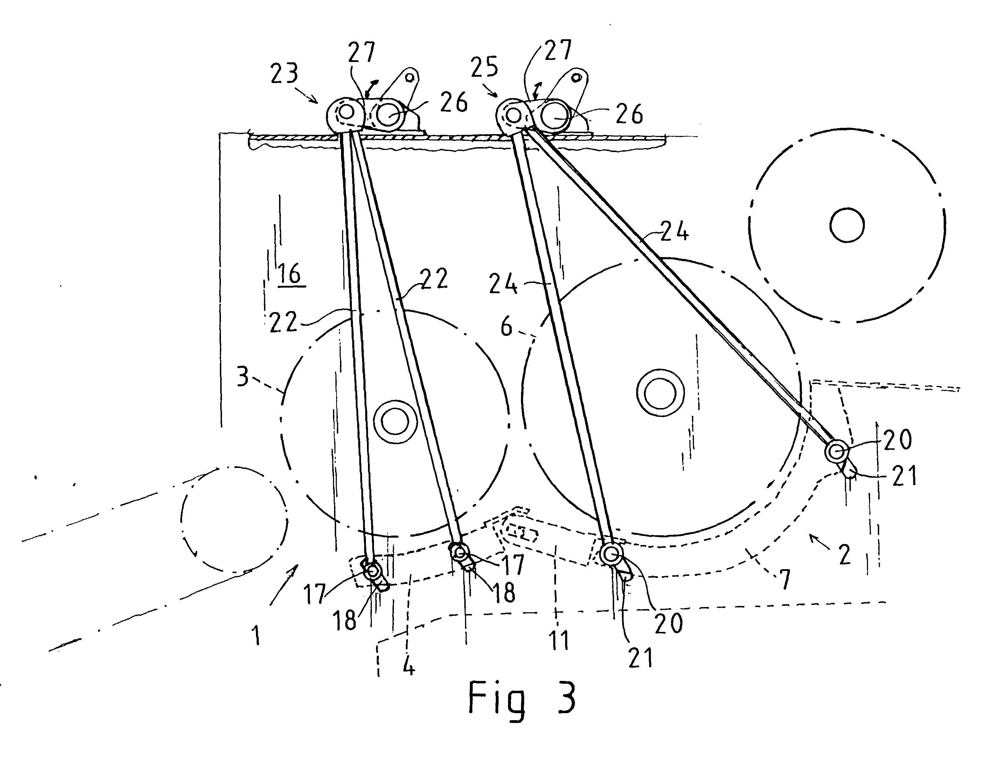

Referring to Fig. 2 and 3, the first concave 4 comprises first end sides 15, which are substantially parallel to the vertical walls 16 of the harvester frame. Each one of the two end sides 15 is provided with a pair of first pins 17 placed at a distance from each other. The harvester frame walls 16 are provided with two elongated first holes 18, which are so fitted that they are in alignment with the first pins 17. The elongated holes 18 are laid in the same direction relative to each other so that the first concave 4, guided by the first pins 17 and holes 18, can be moved towards and away from the first threshing drum 4.

Correspondingly, the second concave 7 comprises second end sides 19, which are substantially parallel to the vertical walls 16 of the harvester frame. Each one of the two end sides 19 is provided with a pair of second pins 20 placed at a distance from each other. The harvester frame walls 16 are provided with two elongated second holes 21, which are so fitted that they are in alignment with the second pins 20. The second holes 21 are laid in the same direction relative to each other so that the second concave 7, guided by the second pins 20 and second holes 21, can be moved towards and away from the second threshing drum 7.

The means used to alter the position of the first concave 4 to adjust the first gap 5 comprise two first drawbars 22, which are connected at their lower ends to the first pins 17 on each end side of the first concave 4. The upper ends of the drawbars 22 are connected to a first control mechanism 23, by means of which the drawbars can be moved. Correspondingly, the adjusting means used to adjust the second gap 8 comprise two second drawbars 24, which are connected at their lower ends to the second pins 20 on each end side of the second concave 7 and at their upper ends to a second control mechanism 25, by means of which the second drawbars can be moved.

The control mechanisms 23 and 25 here comprise a transverse rotative shaft 26 with a crank 27 at one end, on which the drawbars 22 are pivoted. When the rotative shaft 26 is rotated, the crank 27 turns and, depending on the turning direction, either raises or lowers the concave 4, 7 by means of the drawbars. The rotative shaft 26 can be rotated e.g. using a manual operating mechanism 28 as shown in Fig. 1, which is known in itself and will not be described here in detail because the structure of the operating mechanism is part of the expertise of a person skilled in the art. Other types of known lever mechanisms used in combine harvesters can also be applied for the individual adjustment of the concaves 4 and 7.

The invention is not limited to the examples of its embodiments described above, but instead many variations are possible within the framework of the inventive idea defined by the claims.

## Claims

1. Combine harvester which comprises two successive threshing mechanisms (1, 2), designated as the forward or first threshing mechanism (1) and the rearward or second threshing mechanism (2) relative to the direction of advance of the crop material to be threshed, said first threshing mechanism (1) comprising a first threshing drum (3) and a sieve-like first concave (4), whose distance to the first threshing drum is adjustable to allow adjustment of a first gap (5) between them, while the second threshing mechanism (2) comprises a second threshing drum (6), which can be rotated in the same direction and preferably at a higher peripheral speed than the first threshing drum (3), and a sieve-like second concave (7), whose distance to the second threshing drum is adjustable to allow adjustment of a second gap (8) between them, and which combine harvester comprises means for the adjustment of the first gap (5) and the second gap (8), **characterized** in that the first gap (5) and the second gap (8) are each separately adjustable; that the rear end (9) of the fist concave (4) and the front end (10) of the second concave (7), pointing towards each other, are at a distance (A) from each other; and that the combine harvester comprises a sieve-like intermediate bridge (11) which, to cover said distance (A), extends between the first concave (4) and the second concave (7) and is supported by these, said intermediate bridge being designed to pass the crop material from the first concave onto the second concave.

2. Combine harvester as defined in claim 1, **characterized** in that the intermediate bridge (11) comprises a first end (12) and a second end (13) opposite to it; and that the first end (12) of the intermediate bridge is pivoted on the rear end (9) of the first concave (4).

3. Combine harvester as defined in claim 1 or 2, **characterized** in that the second end (13) of the intermediate bridge (11) is supported by the front end (10) of the second concave (7).

4. Combine harvester as defined in claim 2 or 3, **characterized** in that the first end (12) of the intermediate bridge (11) is connected to the first concave (4) via a mechanism 14), such as a pin-and-slot mechanism or the like, that allows a limited motion of the first concave (4) and the intermediate bridge (11) relative to each other when the first gap (5) and/or the second gap (8) is separately adjusted independently of each other without the intermediate bridge (11) tending to move the first and/or the second concave.

5. Combine harvester as defined in any one of claims 1 - 4, **characterized** in that the first concave (4) comprises first end sides (15) substantially parallel to the vertical walls (16) of the harvester frame, each one of the two end sides being provided with two pins (17) at a distance from each other; and that the harvester frame walls (16) are provided with two elongated first holes (18) aligned with the first pins (17) and laid in the same direction relative to each other so that the concave (4), guided by the first pins and holes, can be moved towards and away from the first threshing drum.

6. Combine harvester as defined in any one of claims 1 - 5, **characterized** in that the second concave (7) comprises second end sides (19) substantially parallel to the vertical walls (16) of the harvester frame, each one of the two end sides (19) being provided with a pair of second pins (20) placed at a distance from each other; and that the harvester frame walls (16) are provided with two elongated second holes (21) which are fitted in alignment with the second pins (20) and laid-in the same direction relative to each other so that the second concave (7), guided by the second pins (20) and second holes (21), can be moved towards and away from the second threshing drum (7).

7. Combine harvester as defined in claim 5 or 6, **characterized** in that the means for adjusting the first gap (5) comprise two first drawbars (22) connected at their lower ends to the first pins (17) on each end side (15) of the first concave (4) and at their upper ends to a control mechanism (23), by means of which the first drawbars can be moved.

8. Combine harvester as defined in claim 6 or 7, **characterized** in that the means for adjusting the second gap (8) comprise two second drawbars (24) connected at their lower ends to the second pins (20) on each end side (20) of the second concave (7) and at their upper ends to a control mechanism (23), by means of which the second drawbars can be moved.

## Patentansprüche

1. Mähdrescher, der zwei aufeinanderfolgende Dreschmechanismen (1,2) umfasst, die als der vordere bzw. erste Dreschmechanismus (1) und der hintere bzw. zweite Dreschmechanismus (2) in Bezug auf die Richtung der Fortbewegung des zu dreschenden Erntematerials bezeichnet werden, wobei der erste Dreschmechanismus (1) eine erste Dreschtrommel (1) und einen siebartigen ersten Dreschkorb (4) umfasst, und der Abstand zu dem ersten Dreschtrommel verstellbar ist, so dass ein erster Zwischenraum (5) zwischen ihnen eingestellt werden kann, während der zweite Dreschmechanismus (2) eine zweite Dreschtrommel (6), die in der gleichen Richtung wie die erste Dreschtrommel (3) und vorzugsweise mit einer höheren Umfangsgeschwindigkeit als diese gedreht werden kann, sowie einen siebartigen zweiten Dreschkorb (7) umfasst, und der Abstand zu der zweiten Dreschtrommel verstellbar ist, so dass ein zweiter Zwischenraum (8) zwischen ihnen eingestellt werden kann, und wobei der Mähdrescher eine Einrichtung zum Einstellen des ersten Zwischenraums (5) und des zweiten Zwischenraums (8) umfasst, **dadurch gekennzeichnet**, dass der erste Zwischenraum (5) und der zweite Zwischenraum (8) jeweils separat eingestellt werden können, dass das hintere Ende (9) des ersten Dreschkorbs (4) und das vordere Ende (10) des zweiten Dreschkorbs (7), die einander zugewandt sind, um einen Abstand (A) voneinander entfernt sind, und dass der Mähdrescher eine siebartige Zwischenbrücke (11) umfasst, die sich, um den Abstand (A) abzudecken, zwischen dem ersten Dreschkorb (4) und dem zweiten Dreschkorb (7) erstreckt und von diesen getragen wird, wobei die Zwischenbrücke das Erntematerial von dem ersten Dreschkorb auf den zweiten Dreschkorb leitet.

2. Mähdrescher nach Anspruch 1, **dadurch gekennzeichnet**, dass die Zwischenbrücke (11) ein erstes Ende (12) und ein zweites Ende (13) diesem gegenüber umfasst, und dass das erste Ende (12) der Zwischenbrücke am hinteren Ende (9) des ersten Dreschkorbs (4) schwenkbar gelagert ist.

3. Mähdrescher nach Anspruch 1 oder 2, **dadurch gekennzeichnet**, dass das zweite Ende (13) der Zwischenbrücke (11) vom vorderen Ende (10) des zweiten Dreschkorbs (7) getragen wird.

4. Mähdrescher nach Anspruch 2 oder 3, **dadurch gekennzeichnet**, dass das erste Ende (12) der Zwischenbrücke (11) mit dem ersten Dreschkorb (4) über einen Mechanismus (14), wie beispielsweise einen Zapfen-Einkerbungs-Mechanismus oder dergleichen, verbunden ist, der eine begrenzte Bewegung des ersten Dreschkorbs (4) und der Zwischenbrücke (11) zueinander ermöglicht, wenn der erste Zwischenraum (5) und/oder der zweite Zwischenraum (8) separat unabhängig voneinander eingestellt werden, ohne dass die Zwischenbrücke (11) dazu neigt, den ersten und/oder den zweiten Dreschkorb zu bewegen.

5. Mähdrescher nach einem der Ansprüche 1-4, **dadurch gekennzeichnet**, dass der erste Dreschkorb (4) erste Abschlussseiten (15) im Wesentlichen parallel zu den vertikalen Wänden (16) des Mähdreschergestells umfasst, wobei jede der beiden Abschlussseiten mit zwei Zapfen (17) im Abstand zueinander versehen ist; und dass die Wände (16) des Mähdreschergestells mit zwei ersten Langlöchern (18) versehen sind, die auf die ersten Zapfen (17) ausgerichtet sind und in der gleichen Richtung zueinander liegen, so dass der Dreschkorb (4), von den ersten Zapfen und Löchern geführt, auf die erste Dreschtrommel zu und von ihr weg bewegt werden kann.

6. Mähdrescher nach einem der Ansprüche 1-5, **dadurch gekennzeichnet**, dass der zweite Dreschkorb (7) zweite Abschlussseiten (19) im Wesentlichen parallel zu den vertikalen Wänden (16) des Mähdreschergestells umfasst, wobei jede der beiden Abschlussseiten (19) mit einem Paar zweiter Zapfen (20) versehen ist, die im Abstand zueinander angeordnet sind, und dass die Wände (16) des Mähdreschergestells mit zwei zweiten Langlöchem (21) versehen sind, die auf die zweiten Zapfen (20) ausgerichtet angebracht sind und in der gleichen Richtung zueinander liegen, so dass der zweite Dreschkorb (7), von den zweiten Zapfen (20) und den zweiten Löchern (21) geführt, auf die zweite Dreschtrommel (7) zu und von ihr weg bewegt werden kann.

7. Mähdrescher nach Anspruch 5 oder 6, **dadurch gekennzeichnet**, das die Einrichtung zum Einstellen des ersten Zwischenraums (5) zwei erste Zugstangen (22) umfasst, die an ihren unteren Enden mit den ersten Zapfen (17) an jeder Abschlussseite (15) des ersten Dreschkorbs (4) und an ihren oberen Enden mit einem Bedienmechanismus (23) verbunden sind, mit dem die ersten Zugstangen bewegt werden können.

8. Mähdrescher nach Anspruch 6 oder 7, **dadurch gekennzeichnet**, dass die Einrichtung zum Einstellen des zweiten Zwischenraums (8) zwei zweite Zugstangen (24) umfasst, die an ihren unten Enden mit den zweiten Zapfen (20) an jeder Anschlussseite (19) des zweiten Dreschkorbs (7) und an ihren oberen Enden mit einem Bedienmechanismus (23) verbunden sind, mit dem die zweiten Zugstangen bewegt werden können.

## Revendications

1. Moissonneuse-batteuse comprenant deux organes de battage successifs (1, 2), désignés par premier organe de battage ou organe de battage avant (1) et second organe de battage ou organe de battage arrière (2), par rapport au sens de progression des éléments de la récolte à battre, ledit premier organe de battage (1) comprenant un premier batteur (3) et un premier contrebatteur en forme de grille (4), dont la distance au premier contrebatteur est réglable pour permettre le réglage d'un premier interstice (5) entre eux, et le second organe de battage (2) comprend un second batteur (6), qui peut être mis en rotation dans le même sens que et de préférence à une vitesse périphérique supérieure à celui et celle du premier batteur (3), et un second contrebatteur en forme de grille (7), dont la distance au second batteur est réglable pour permettre le réglage d'un second interstice (8) entre eux ; ladite moissonneuse-batteuse comprenant un moyen permettant de régler le premier interstice (5) et le second interstice (8), caractérisée en ce que le premier interstice (5) et le second interstice (8) sont chacun réglables séparément ; en ce que l'extrémité arrière (9) du premier contrebatteur (4) et l'extrémité avant (10) du second contrebatteur (7) dirigées l'une vers l'autre, se trouvent à une certaine distance (A) l'une de l'autre ; et en ce que la moissonneuse-batteuse comprend un pont intermédiaire en forme de grille (11) qui, pour couvrir ladite distance (A), s'étend entre le premier contrebatteur (4) et le second contrebatteur (7) et est supporté par ceux-ci, ledit pont intermédiaire étant conçu faire passer les éléments de la récolte du premier contrebatteur au second contrebatteur.

2. Moissonneuse-batteuse selon la revendication 1, caractérisée en ce que le pont intermédiaire (11) comprend une première extrémité (12) et une seconde extrémité (13) opposée à la première ; et en ce que la première extrémité (12) du pont intermédiaire pivote sur l'extrémité arrière (9) du premier contrebatteur (4).

3. Moissonneuse-batteuse selon la revendication 1 ou 2, caractérisée en ce que la seconde extrémité (13) du pont intermédiaire est supportée par l'extrémité avant (10) du second contrebatteur (7).

4. Moissonneuse-batteuse selon la revendication 2 ou 3, caractérisée en ce que la première extrémité (12) du pont intermédiaire (11) est reliée au premier contrebatteur (4) par l'intermédiaire d'un mécanisme (14), tel qu'un mécanisme composé d'une broche et d'une fente ou similaire, qui permet un mouvement limité du premier contrebatteur (4) par rapport au pont intermédiaire (11) lorsque le premier interstice (5) et/ou le second interstice (8) est (sont) réglé(s) indépendamment l'un de l'autre sans que le pont intermédiaire (11) déplace le(s) premier et/ou second contrebatteur(s).

5. Moissonneuse-batteuse selon l'une quelconque des revendications 1 à 4, caractérisée en ce que le premier contrebatteur (4) comprend des premiers côtés d'extrémité (15) sensiblement parallèles aux parois verticales (16) du cadre de la moissonneuse-batteuse, chacun des deux côtés d'extrémité étant muni de deux broches (17) placées à une certaine distance l'une de l'autre ; et en ce que les parois du cadre de la moissonneuse-batteuse (16) sont munies de deux premiers trous allongés (18) alignés avec les premières broches (17) et placés dans le même sens de sorte que le contrebatteur (4), guidé par les premiers trous et broches, peut être rapproché ou éloigné du premier batteur.

6. Moissonneuse-batteuse selon l'une quelconque des revendications 1 à 5, caractérisée en ce que le second contrebatteur (7) comprend des seconds côtés d'extrémité (19) sensiblement parallèles aux parois verticales (16) du cadre de la moissonneuse-batteuse, chacun des deux côtés d'extrémité (19) étant munis d'une paire de secondes broches (20) placées à une certaine distance l'une de l'autre ; et en ce que les parois du cadre de la moissonneuse-batteuse (16) sont munies de deux seconds trous allongés (21) alignés avec les secondes broches (20) et placés dans le même sens de sorte que le second contrebatteur (7), guidé par les secondes broches (20) et les seconds trous (21), peut être rapproché ou éloigné du second batteur (6).

7. Moissonneuse-batteuse selon la revendication 5 ou 6, caractérisée en ce que le moyen permettant de régler le premier interstice (5) comprend deux premières barres de traction (22) reliées, au niveau de leurs extrémités inférieures, aux premières broches (17) sur chaque côté d'extrémité (15) du premier contrebatteur (4) et au niveau de leurs extrémités supérieures à un mécanisme de commande (23), au moyen duquel les premières barres de traction peuvent être déplacées.

8. Moissonneuse-batteuse selon la revendication 6 ou 7, caractérisée en ce que le moyen permettant de régler le second interstice (8) comprend deux secondes barres de traction (24) reliées, au niveau de leurs extrémités inférieures, aux secondes broches (20) sur chaque côté d'extrémité (20) du second contrebatteur (7) et, au niveau de leurs extrémités supérieures, à un mécanisme de commande (23), au moyen duquel les secondes barres de traction peuvent être déplacées.
